# EUROPEAN PATENT SPECIFICATION

(11) **EP 3 526 567 B1**
(45) Date of publication and mention of the grant of the patent: **15.07.2020**
(21) Application number: 17790876.1
(22) Date of filing: 13.10.2017
(51) Int. Cl.: G01L 11/00, E21B 47/06, E21B 21/08, G01L 1/16, G01L 7/08, G01L 9/00

(54) **PORE PRESSURE MONITORING DEVICE AND METHOD FOR MONITORING PORE WATER PRESSURE**
VERFAHREN ZUR PORENDRUCKÜBERWACHUNG UND VERFAHREN ZUR ÜBERWACHUNG DES PORENWASSERDRUCKS
DISPOSITIF DE SURVEILLANCE DE PRESSION INTERSTITIELLE ET PROCÉDÉ DE SURVEILLANCE DE PRESSION D'EAU INTERSTITIELLE

(30) Priority: 14.10.2016 NL 2017622
(43) Date of publication of application: 21.08.2019
(73) Proprietor: Fugro N.V., 2264 SG Leidschendam (NL)
(72) Inventor: HOGERVORST, Franciscus Antonius Nicolaas, 2264 SG Leidschendam (NL)
(74) Representative: Nederlandsch Octrooibureau
(86) International application number: PCT/NL2017/050672
(87) International publication number: WO 2018/070875

(56) References cited:
- US-A- 3 574 284
- US-A- 4 453 401
- US-A- 5 673 752
- US-B1- 6 228 146

## Description

The present invention relates to a long term (months+) pore pressure monitoring device and especially a push-in piezometer or tensiometer, for use e.g., in fields like geotechnical engineering, where it is a part of the risk-management tools, and agriculture, comprising a pressure sensor cavity and a pressure sensor means for sensing a fluid pressure in the sensor cavity.

Further, the invention relates to a method for monitoring pore pressure by use of such a device.

The above devices and methods are in principle known from the art. Thereby pore pressure monitoring devices, e.g. piezometers or tensiometers for use in water unsaturated conditions, are pushed or buried in the ground for long term monitoring of the local pore fluid pressure. Normally, the device contains a pressure transducer of which the pressure sensitive membrane is in direct physical contact with water in the free water cavity that is in direct contact with surrounding native pore water. Solid particles are kept out of the water cavity by a rigid porous soil/water filter with pore structures that are comparable to that of fine sands. The soil/water filter resists ground pressure exerted by the soil matrix, and allows surrounding pore water pressure to maintain equilibrium with water in the sensor water cavity. The pressure transducer is connected to a data acquisition and logging means arranged substantially outside the ground so that the monitored data can be analysed and processed accordingly. As the devices comprise durable casings and rigid solid particle soil/water filters, they can withstand ground pressures to depths of common interest in geotechnics and hydrology. Most piezometers are pushed or buried in the ground to measure the local ground water pressure in consolidation prone layers, at the depth of installation. The transducers and pressure gauges respectively are i.a. provided as vibrating-wire, pneumatic, or strain-gauge in operation, converting pressure into an electric signal.

US 4 453 401 A1 discloses a system for measuring transient pore water pressure in the ground that utilizes a probe member having a unique arrangement of a pressure sensor and a soil stress isolation filter. The probe member has a body portion with a hollow cavity defined therein. The pressure sensor in the form of a ceramic transducer is mounted in the cavity, and the filter in the form of a circumferential gap formed on the body communicates with the cavity. The filter is also configured for isolating the sensor from effective soil fabric stresses while allowing access to the transducer by pore water pressure. A coupling medium in the form of silicon grease fills the cavity so as to transmit the pore water pressure to the transducer.

US 3 574 284 A1 discloses a pore pressure detector comprising a body adapted to be placed under the ground surface having a first cavity and a second cavity positioned therein, said first cavity being in fluid communication with the liquid surrounding said body. It further comprises diaphragm means separating said first cavity and said second cavity, a fluid pressure means to impose an increasing pressure within said second cavity and valve means in said fluid pressure means to interrupt the pressurization of said second cavity. Said valve means are operatively connected to said diaphragm so that when the force against said diaphragm from said second cavity equals the force against said diaphragm from said first cavity said valve closes. Also provided are means to measure the pressure in said second cavity comprising a pressure sensor in fluid communicating with said first chamber and fluid passageway means communicating with said first chamber to remove gases from said first chamber.

The current practice is that piezometers (or tensiometers) are pushed into the ground for pore pressure monitoring. Measurements are performed underground for several days. It has been determined that large fractions of the pore pressure monitoring data and especially those from devices placed in shallow Holocene strata started to deviate significantly from their earlier measurements, in many different ways. Newly placed instruments in the direct vicinity of older instruments confirmed that stable measurements could not be guaranteed for more than 3 months.

As deviations can remain undetected for months, the underlying processes pose a hidden threat to the reliability of the decision tree for geotechnical risk management that fully relies on pore water pressure data, rendering piezometers useless for many current applications. Long-term stability of the sensor readings are achieved only by intensive maintenance and yearly replacement of all pore pressure monitoring devices.

This unpredictability of individual sensor readings and their time series, in situations where little or no redundancy is available, leads to dysfunctional decision chains, unacceptable risks and corresponding liabilities. Furthermore, high costs arise from error diagnostics, redundancy arrangements and replacement work that cannot always be covered by project budgets.

It is therefore necessary to provide an appropriate solution for eliminating the source of the process behind any such deviations.

Given that newly placed measurement devices do not show this behaviour at first, and once deviations become obvious it appears that refreshment of the pressure measurement cavity succeeded in temporarily restoring instrument performance. Empirical data increased the strength of the hypothesis that groundwater-borne gasses of biogeochemical origin form bubbles inside the sensor cavity and maybe inside the limited pore space of the ground filter, thereby limiting connectivity with surrounding pore water and causing a pressure build-up that creates errors on the pressure transducers.

The above problem is inter alia solved by a device and a method according to the independent claims.

In order to solve the above-mentioned problems, the present invention refers to degassing of pressure monitoring devices and especially of piezometers or tensiometers

In detail, the object is solved by a pore pressure monitoring device, for use in geotechnical engineering, and especially for being deployed underground for monitoring pore-water pressure in the surrounding ground, comprising a pressure sensor cavity, a housing surrounding the sensor cavity, a pressure sensor means, for sensing a fluid pressure of a fluid in the sensor cavity, wherein the cavity is in fluid communication with the surrounding ground, so as to allow equalisation of outside and inside pressure and ensure that no granular/solid pressure is exerted to the pressure sensor means, wherein a degassing means is provided comprising a gas discharge means and a gas-water filter means, the gas-water filter means providing a route for gas to escape from the fluid in the sensor cavity towards the gas discharge means for discharging the filtered gas to the atmosphere. Especially in this regard this fluid communication may provide for an exchange of gases and/or liquids between the outside of the pore pressure monitoring device and especially the surrounding ground and the inside of this cavity.

Also this object is solved by a method for monitoring pore water pressure by use of a pore pressure monitoring device as explained herein, comprising the steps of: deploying the pore pressure monitoring device underground; monitoring pore-pressure data received by the pressure sensor means; especially constantly discharging gas accumulated in the sensor cavity of the pore pressure monitoring device via the degassing means to above ground.

It has been observed that by providing a pore pressure monitoring device, in the following called in general a piezometer, having a degassing means as described before does not require active management or handling anymore, as the above described measurement deviations no longer occur. It turned out that by just providing the degassing means, preferably without active applied suction, via the atmospheric connection tube (as it is applied for degassing tensiometer setups) the disturbances of measurement data no longer occurred, thereby supporting the hypothesis that dissolved gases that would have otherwise accumulated in the sensor cavity can now diffuse along the partial gas pressure gradient and escape to the atmosphere. In general, accumulation of gas and especially gas bubble formation in the sensor cavity and surrounding ground particle filter pores resulting in measurement deviations is omitted.

The pore pressure monitoring device can be provided having the degassing means, the degassing means comprising the gas-water filter means for separating or filtering gas out of the fluid in the sensor cavity respectively, and the gas discharge means for discharging the separated and filtered gas respectably to above ground and especially to atmosphere.

Optionally, and especially for application above ground water level, e.g. if the pore pressure monitoring device is a or comprises a tensiometer, the degassing system may require vacuum applied to the atmospheric side of the water-gas filter, so as to maintain a negative partial gas pressure gradient towards the atmosphere. In an embodiment this degassing method is permanent (maintained throughout the operation of the tensiometer or piezometer) and/or passive (does not require energy for its operation).

Optionally, the gas discharge means extends from the sensor cavity to the ground surface and optionally allows for other purposes such as sampling and in-situ calibration. The gas discharge means optionally establishes fluid- and especially a gas connection to the atmosphere. "Extending to above the ground" and "to the atmosphere", respectively, inter alia means that the gas discharge means at least provides a fluid and especially a gas coupling between the atmosphere and the sensor cavity at its underground position, i.a. the position where the pore pressure monitoring device is located in the ground. The coupling is provided in such a way that gas accumulated in the sensor cavity can be discharged to the atmosphere, especially by the pressure differences between the pressure in the cavity and the atmosphere and/or or by active pressure and especially suction means. Alternative, there is provided a connection means especially in, on or above the ground, providing a coupling between the gas discharge means and the atmosphere, e.g. a terminal where the gas discharge means is coupled to and which is for example open to the atmosphere. Covered by this definition is also a terminal or a similar means providing a further means for directing the gas discharged from the cavity to an atmosphere outlet or a similar outlet allowing discharge of that gas to the atmosphere. It is also possible to provide a storage means where this gas is stored. Storing can be provided via passive or active storing means, e.g. for example a pressure pump to store the gas into the storage means. Also using this gas for further analysis of the ground in the position where the pore pressure monitoring device is situated is possible. Here respective analysis means can be used. Therefore, alternatively discharging the gas to the atmosphere also means discharging the gas to storage or further analysis tanks or means for further use.

Alternatively, the gas discharge means comprises an inner lumen, especially extending from the sensor cavity to the atmosphere. Such a gas discharge means can for example be provided as a gas discharge tube having such an inner lumen. Similar guiding arrangements could also be provided having an inner lumen for that purpose.

Alternatively, the gas-water filter means is guided at least partially within the gas discharge means. This guarantees a pressure resistant sealing between the inner lumen/cavities of the gas-water filter means and the discharging means. Any fluid entering the gas discharge means would lower liquid pressure in the sensor cavity, rendering the instrument unfit and susceptible to hysteresis.

Alternatively, the gas-water filter means comprises a gas permeable membrane for separation of the gas from the water in the cavity that remains pressurized as the filter blocks the displacement of water. An example for a respectively provided gas-water filter means is a gas permeable membrane tube for separating the gas from the fluid in the sensor cavity. The gas-water filter means is especially in this configuration preferably arranged within the fluid and/or within the sensor cavity. The gas-water filter means might comprise or be provided as a gas-porous/ water retaining filter means. The fluid can be any kind of fluid, especially water.

Alternatively, the gas-water filter means projects with at least a projecting portion from the gas discharge means inside the sensor cavity and/or from a housing surrounding the cavity. If, for example, the gas discharge means is a tube or similar guiding element having an inner lumen, the gas-water filter means, especially provided as a gas permeable membrane tube, is guided at least partially within that lumen and preferably projects at the distal ending, i.e. the ending extending in the sensor cavity, of the discharge means, thereby preferably standing especially in direct contact with the fluid in the cavity for separating the gas and providing a respective route to the gas discharge means.

Alternatively, the gas-water filter means, and especially a gas permeable membrane tube, comprises a closed distal end portion, which is impermeable at least for water. This ensures filtering over the whole portion used for separation of the gas and prevents entering of dirt. Also it is possible to provide a closed distal end in form of a totally impermeable means, e.g. a plug or a similar closing means.

Alternatively, the gas-water filter means and especially the gas permeable membrane tube is coupled to or at least partially guided within the gas discharge means. Especially in this configuration preferably a connection portion is provided where the gas-water filter means is coupled to the discharge means so that the gas separated from the fluid is directed from the gas-water filter means to the discharge means. When the gas-water filter means is for example provided as a gas permeable membrane tube, such tube can be arranged in such a way that it is at least partially guided within the gas discharge means and coupled therein. It is also possible to couple the gas-water filter means at the end portion of the gas discharge means, especially by gluing, crimping, by additional connection means or by a respective hull configuration, where the membrane tube is slid over the gas discharge means for coupling to it. It is also possible to provide the gas-water filter means in such way that is introduced to the gas discharge means over a respective portion, then being coupled within the gas discharge means by friction.

It is also possible that the gas-water filter means is provided at least partially as the gas discharge means itself. This means that the gas-water filter means provides for discharging the gas over a respective portion and e.g. in total from the cavity to the ground and/or an atmosphere connection means. A gas-water filter means provided as a gas permeable membrane tube can e.g. be arranged to full fill this purpose and features respectively.

Alternatively, the gas-water filter means and especially the gas permeable membrane tube substantially extends from the sensor cavity to an atmosphere connection means. Such an atmosphere connection means can for example be a terminal or simply an end portion extending to, on and/or from the ground to allow discharge of the filtered gas. Also connection means to storage tanks or similar analysis means are possible, as already explained above.

Guiding the gas-water filter means within the discharge means alternatively provides for a multi-wall arrangement, wherein especially the gas discharge means can be provided in such a way that it protects the gas-water-filter means guided within.

In a special embodiment it is possible that the gas-water filter means, e.g. provided as a gas permeable membrane tube, extends almost in total from the cavity to above ground and/or to an atmosphere connection means and especially a means arranged in, above and/or on ground.

Alternatively, the gas discharge means comprises an outer protection sleeve especially provided in such a way that it protects the other parts of gas discharge means, e.g. gas guiding parts, the filter means etc. from mechanical impacts.

Alternatively, the gas discharge means and/or the gas-water filter means are made of a flexible material and especially a plastic material.

Alternatively, the housing surrounding the cavity comprises a fluid filter means and especially a particle filter, inter alia a slotted and/or screened and/or porous portion for filtering fluid and especially water out of the ground. This filter means may provide for the fluid communication with the surrounding ground, so as to allow equalisation of outside and inside pressure and ensure that no granular/solid pressure is exerted to the pressure sensor means. In detail it may provide for an exchange of gases and/or liquids between the outside of the pore pressure monitoring device and especially the surrounding ground and the inside of this cavity.

This housing can be provided resistant against mechanical impacts acting on the pore pressure monitoring device deployed in the ground. Here all known arrangements for allowing filtration of fluids and especially water out of the ground in the position where the pore pressure monitoring device is located are usable.

Preferably, the pore pressure monitoring device has a data connection means for communicational coupling the pressure sensor means with a data receiving means substantially outside the ground. With such an arrangement protection of the couplings between the data sensor and the cavity in the ground and the surface outside the ground is easily possible and especially installable.

Preferably, the degassing means is at least over a section guided within a housing surrounding the sensor cavity. Such a guiding can for example be provided as a bore or similar receptacle, the degassing means is at least over a section guided in. Especially in such a configuration further connection and sealing means can be provided especially fluid tightly coupling of the housing to other relevant parts of the pore pressure monitoring device for example for coupling the housing with a penetration cone arranged at the housing.

The invention also relates to a method for monitoring pore pressure by use of a pore pressuring monitoring device as explained herein, comprising the steps of deploying the pore pressure monitoring device in ground; monitoring, i.e. receiving, collecting, transmitting and/or further processing of the pore-pressure data received by the pressure sensor; and discharging gas accumulated in the sensor cavity of the pore pressure monitoring device via the degassing means to above ground or the atmosphere. The method step of deploying the pore pressure monitoring device underground can inter alia comprise the step of entering the pore pressure monitoring device into a bore hole in the ground and sealing the bore hole with clay, bentonite, concrete or a similar sealing material or pushing the pressure monitoring device into the ground to its intended installation position.

These and other features, aspects, and advantages of the devices and methods of the present disclosure will become better understood from the following description, appended claims, and accompanying drawings, wherein:
Fig. 1a shows a schematic cross-section of one embodiment of the pore pressure monitoring device according to the invention;
Fig. 1b shows a more detailed schematic excerpt of Fig. 1a;
Fig. 2 shows a schematic isometric view of the embodiment used in Fig. 1a;
Fig. 3 shows a schematic isometric view of a part of another embodiment of Fig. 2;
Fig. 4 shows schematically embodiments of degassing means; and
Fig. 5 shows schematically the degassing means at least partially inserted into a housing and similar parts of an embodiment of the pore pressure monitoring device according to the invention.

With regard to the accompanying drawings, for identical or similar parts identical reference signs are used, wherein indices might be set.

Unless otherwise defined, all terms (including technical and scientific terms) used herein have the same meaning as commonly understood by one of ordinary skill in the art to which this invention belongs as read in the context of the description and drawings. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In some instances, detailed descriptions of well-known devices and methods may be omitted so as not to obscure the description of the present systems and methods. Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise. All publications, patent applications, patents, and other references mentioned herein are incorporated by reference in their entirety. In case of conflict, the present specification, including definitions, will control.

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. The description of the exemplary embodiments is intended to be read in connection with the accompanying drawings, which are to be considered part of the entire written description. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. Relative terms as well as derivatives thereof should be construed to refer to the orientation as then described or as shown in the drawing under discussion. These relative terms are for convenience of description and do not require that the system be constructed or operated in a particular orientation unless stated otherwise.

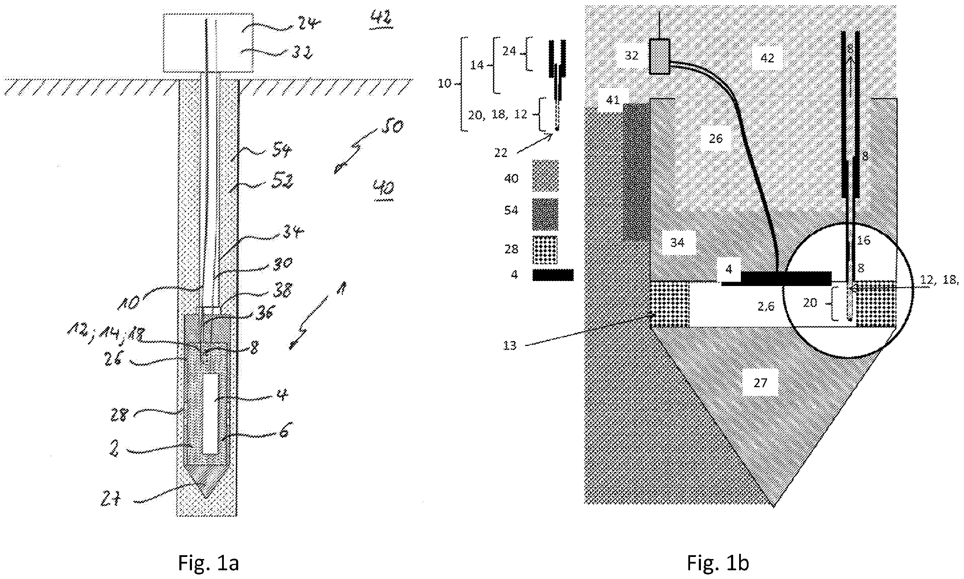

Figs. 1a and 1b disclose one embodiment of a pore pressure monitoring device 1, and especially a tensiometer or a piezometer, for use in geotechnical engineering and especially for being deployed underground for monitoring pore-water pressure in the surrounding ground 40 according to the invention. Fig. 1b shows a more detailed schematic excerpt of the pore pressure monitoring device 1 according to Fig. 1a.

The pore pressure monitoring device comprises a pressure sensor cavity 2, in this embodiment surrounded by a housing 26. The housing 26 here comprises a cone tip 27. With regard to the housing, different embodiments are possible to be provided, for example multi-part housings, comprising multiple parts couplable with each other. Further multi-layer housings are possible comprising multiple layers for providing the sensor cavity or similar cavities needed for measurement or storage purposes.

Within the housing a pressure sensor means 4 is arranged, which is for example arranged for measuring fluid pressure of a fluid 6 in the cavity 2. Besides measurement of pressures, the pressure sensor means could also be provided as any other analysis means, for example for gas analysis, water analysis or a similar fluid analysis, when required. Thereby it is not necessary that means for measuring the pressure of the fluid are provided as well. For ease of understanding therefore in the whole application the pressure sensor means is a means for measuring not only pressure, but also or instead any other variables necessary in geotechnical engineering.

The pore pressure monitoring device 1 is alternatively further provided with a data connection means 30 for communicational coupling of the pressure sensor means 4 with a data receiving means 32 substantially on or outside the ground 40. This data receiving means can be any kind of means for receiving the data collected by the sensor means 4 in the cavity 2 or any other sensor means arranged at the pore pressure monitoring device deployed in the ground 40. The data connection means 30 can for example be a cable for electric data transmission. Any other embodiments of data connection means are usable. The data connection means 30 may be guided within a protection means 34, here for example provided as a tube extending from the housing 26 of the pore pressure monitoring device to substantially above ground 40/ to atmosphere 42. In principle the cavity is in fluid communication with the surrounding ground 40, so as to allow equalisation of outside and inside pressure and ensure that no granular/solid pressure is exerted to the pressure sensor means (4). For that, the housing 26 surrounding the sensor cavity may be provided at least partially fluid permeable, and especially comprising a fluid-solid filter means 13, so as to allow equalisation of outside and inside pressure, i.e. the pressure outside and inside the cavity, and at the same time ensure that no granular/solid pressure is exerted to the pressure sensor means 4.

Especially in this regard, the housing 26 is alternatively provided with a fluid filter means 28 and especially a particle filter, optionally with a slotted and/or screened and/or porous portion, for filtering fluid 6 out of the ground 40. Dependent on the fluid 6 which has to be filtered different fluid filter means 28 are usable.

For discharging of gas accumulating in the cavity over time a degassing means 10 is provided arranged within the pore pressure monitoring device 1.

The degassing means comprises a gas discharge means 14 for discharging gas 8 separated from the fluid 6 in the sensor cavity 2 to above ground 40 and/or to the atmosphere 42. The discharged gas 8 can be discharged to the atmosphere 42, which is also meant to be any position or means close to above ground 40, at the ground surface or above ground 40 or to any other further storage or analysis means. For that reason alternatively an atmosphere connection means 24 is provided for further processing of the filtered gas, i.e. for discharging it to the atmosphere 42 or for guiding it to further processing means, like storage tanks, analysis means, etc. Optionally, the gas discharge means extends from the sensor cavity to or above the ground surface and further optionally allows for other purposes such as sampling and in-situ calibration.

As shown with Fig. 1a and 1b, the sensor means 4 can be arranged within the cavity 2.

Alternatively, the gas discharge means 10 extends from the sensor cavity 2 to above ground 40 and/or the atmosphere connection means 24, and especially in such a way that it is establishing fluid connection to above ground 40, allowing for discharge of the gas.

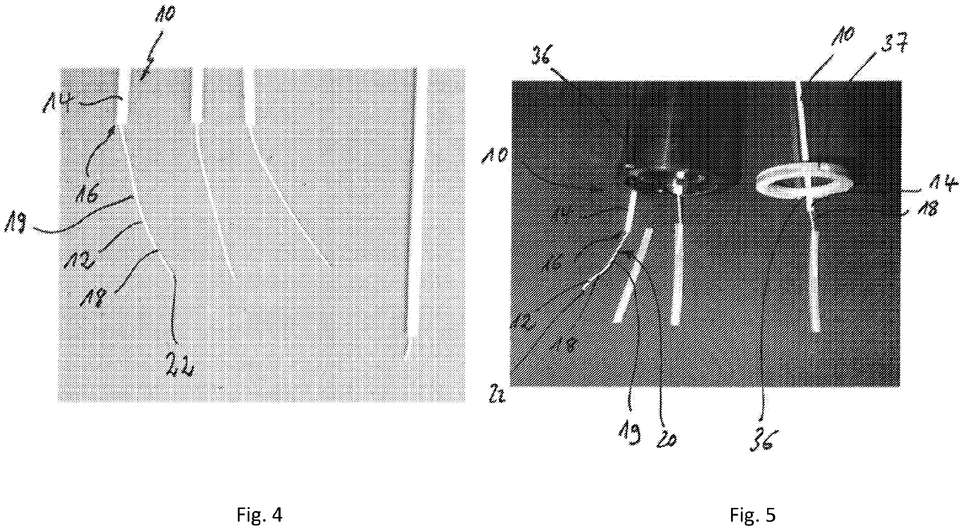

As shown with Fig. 4 and 5, alternatively the gas discharge means comprises an inner lumen 16 especially extending from the sensor cavity 2 above ground 40. The discharge means 14 can for example be provided as a discharge tube or a similar means having an inner lumen 16.

The degassing means further comprises a gas-water filter means 12 for separating gas 8 out of the fluid 6. It is possible to guide the gas-water filter means 12 at least partially within the gas discharge means 14 and especially within an inner lumen of the gas discharge means, especially when the gas discharge means 14 is provided as a tube. It is, for example, possible to arrange the gas-water filter means 12 in such a way that it can be entered and distracted from the gas discharge means 14 even when the pore pressure monitoring device is already deployed in the ground.

With regard to the gas discharge means, it is possible to couple the gas-water filter means 12 to that gas discharge means 14 or to guide the gas-water filter means within the gas discharge means in total, especially from the cavity 2 to above ground 40 or to the atmosphere connection means 24 etc.. Connecting the gas-water filter means 12 to the gas discharge means can be done via a coupling element arranged at the proximal and distal portions of the two means respectively or via guiding the gas-water filter means at least partially within the discharge means 14 and fixing the respective means together after a respective portion. Of course, also guiding of the gas-water filter means 12 at least partially outside and especially over the gas discharge means 14 is possible. Here also the above mentioned coupling of the gas-water filter means 12 to the gas discharge means 14 is possible.

In general, it is also possible that the gas-water filter means 12 is provided at least partially as the gas discharge means 14 and arranged for discharging the gas 8 from the cavity 2 to above ground 40 etc. or to a gas discharge means arranged distant from the cavity 2. If the gas-water filter means is, for example, a permeable membrane tube, it is possible to use that membrane tube for discharging the gas from the cavity to above ground 40 or to a gas discharge means arranged distant from the cavity 2. As schematically shown with Fig. 1a, the gas-water filter means 12 comprises a gas permeable membrane 18 for separating or filtering the gas 8 from the fluid 6 in the sensor cavity. This filtered gas 6 can then be discharged via the discharge means 14 to above ground 40. The gas-water filter means is especially adapted for providing a route for gas 8 to escape from the fluid 6 in the sensor cavity 2 towards the gas discharge means 14 for discharging the filtered gas 8 to above ground and especially to the atmosphere 42.

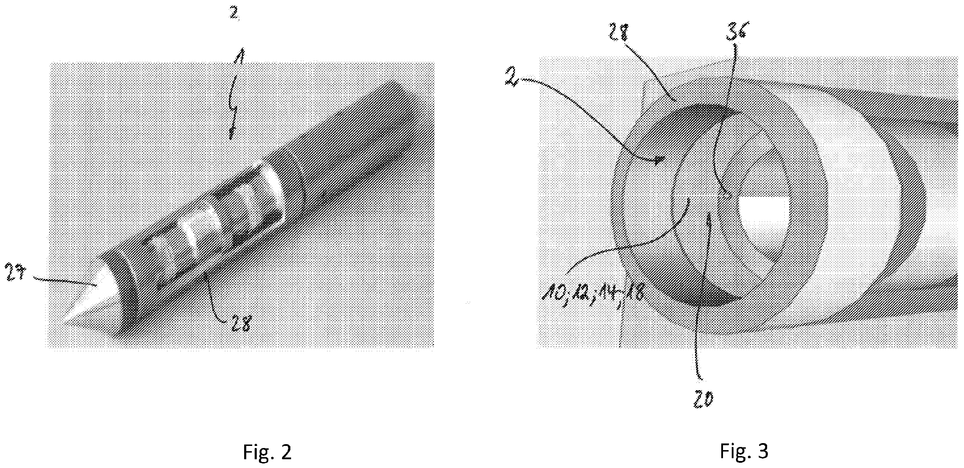

As in detail shown with Figs. 2 and 3, the housing 26 at least partially provides the cavity 2. Within that cavity 2 the sensor means 4 is arranged.

By reliably coupling the degassing means 10 to the cavity 2, so that the fluid 6 within the cavity can make contact with the degassing means, dissolved gasses can migrate towards and trough the degassing means. The water remains in the cavity occupying all space, while the separated gas escapes therefrom; the degassing means 10 is alternatively guided within a bore 36 in the housing 26 or at least a part 37 of the housing. It is possible to fix the degassing means 10 within that bore 36, for example via friction bonding, gluing etc. and especially gas and/or fluid tight gluing or similar fixation.

As shown with this embodiment, the gas-water filter means 12 can be arranged at the most upper portion of the cavity 2, so that gases accumulating in the cavity 2 are directed to the degassing means.

Figs. 4 and 5 disclose embodiments of the degassing means 10 comprising the discharge means 14 and the gas-water filter means 12.

As already mentioned before, the gas discharge means 14 can comprise a discharge tube having an inner lumen 16. Within that inner lumen 16 the gas-water filter means 12 can be at least partially guided and can for example extend from the cavity 2 to a position above ground 40. For filtering the gas out of the fluid 6, which preferably is water, the gas-water filter means 12 can be provided or can comprise a gas permeable membrane 18 especially made from a hydrophobic material. The gas permeable membrane 18 can be provided as a gas permeable membrane fibre 19 as, for example, shown with Figs. 4 and 5. For securing reliable gas separation, it is possible to provide the gas-water filter means and especially such a filter means 12 provided as a gas permeable membrane fibre 19 with a closed distal end portion 22, which is impermeable at least for water.

As shown with Figs. 3 and 5, the gas-water filter means 12 can comprise a projecting portion 20 which projects inside the cavity 2. It is possible to arrange the gas-water filter means 12 in such a way that it projects from the gas discharge means 14 as well, which is for example shown with Figs. 4 and 5. As mentioned, it is also possible to provide the gas-water filter means as the gas discharge means 14. With such an embodiment, the gas-water filter means is arranged in such a way that it can also discharge the gas in direction to above ground and within a special embodiment from the cavity 2 to above ground 40. Here also additional protection tubes and sleeves, respectively, can be used for protecting the gas-water filter means 12. In general, it is possible to provide the discharge means and/or the gas-water filter means made of a flexible material and especially plastic material. Especially for the gas-water filter means it is possible to provide it made from a hydrophobic material. This, of course, also applies for the material of the gas discharge means 14.

As for example shown with Fig. 1a, the degassing means 10 and the data connection means 30 can at least over a section be guided within a joint protection means 34 and especially a protection tube. It is also possible to provide distinct protection tubes for each of the means 10, 30. Further, it is possible to provide the pore pressure monitoring device with respective coupling devices 38 for coupling such means 30 extending to above ground 40 to the housing 26 or a similar parts of the pore pressure monitoring device 1 deployed in the ground. Multiple and/or individual coupling means can for example be provided with individual parts of the degassing means 10, e.g. the discharge means 14, the gas-water filter means 12 and/or the data connection means 30. Here, individual coupling means as well as grouped coupling means for connecting multiple of these parts simultaneously are usable.

The invention also relates to a method for monitoring pore-water pressure by use of the pore pressure monitoring device as explained before. This method comprises the steps of deploying the pore pressure monitoring device 1 underground; monitoring pore-pressure data received by the pressure sensor means 4, discharging gas 8 accumulated in the sensor cavity 2 of the pore pressure monitoring device 1 via the degassing means 10 above ground 40 and especially to the atmosphere. For deploying the pore pressure monitoring device 1 into ground, it is inter alia possible to either introduce the device 1 into a bore hole 52 and seal the bore hole via clay, bentonite, concrete or a similar sealing means 54 (this is shown, for example, with Fig. 1a) or to push the device 1 into ground to the installation and intended measurement position.

For the purpose of clarity and a concise description, features are described herein as part of the same or separate embodiments, however, it will be appreciated that the scope of the invention may include embodiments having combinations of all or some of the features described.

While the present systems and methods have been described in particular detail with reference to specific exemplary embodiments thereof, it should also be appreciated that numerous modifications and alternative embodiments may be devised by those having ordinary skill in the art without departing from the scope of the present disclosure. For example, embodiments wherein devices or systems are disclosed to be arranged and/or constructed for performing a specified method or function inherently disclose the method or function as such and/or in combination with other disclosed embodiments of methods or systems. Furthermore, embodiments of methods are considered to inherently disclose their implementation in respective hardware, where possible, in combination with other disclosed embodiments of methods or systems. Furthermore, methods that can be embodied as program instructions, e.g. on a non-transient computer-readable storage medium, are considered inherently disclosed as such embodiment.

Finally, the above-discussion is intended to be merely illustrative of the present systems and/or methods and should not be construed as limiting the appended claims to any particular embodiment or group of embodiments. The specification and drawings are accordingly to be regarded in an illustrative manner and are not intended to limit the scope of the appended claims. In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. The mere fact that certain measures are recited in mutually different claims does not indicate that a combination of these measures cannot be used to advantage. In particular, all working combinations of the claims are considered inherently disclosed.

### LIST OF ITEMS

- 1: pore pressure monitoring device
- 2: sensor cavity
- 4: pressure sensor
- 6: sensor cavity fluid
- 8: gas pressure equalisation/ discharging route
- 10: de-gassing means
- 12: gas-fluid filter means
- 13: fluid-solid filter means
- 14: gas discharge means
- 16: inner lumen
- 18: gas permeable membrane
- 20: projecting portion of the hydrophobic gas filter means
- 22: closed distal end portion
- 24: atmosphere connection means
- 26: sensor cavity housing
- 27: cone tip
- 28: fluid filter means
- 30: data connection means
- 32: data receiving means
- 34: protection means
- 36: bore
- 37: part of the housing providing a bore.
- 38: coupling devices
- 40: ground / soil matrix
- 42: atmosphere

## Claims

1. Pore pressure monitoring device, for use in geotechnical engineering, adapted to be deployed underground for monitoring pore-water pressure in the surrounding ground, comprising:
a pressure sensor cavity (2),
a housing (26) surrounding the sensor cavity (2),
a pressure sensor means (4), for sensing a fluid (6) pressure of a fluid in the sensor cavity (2), wherein
the cavity is in fluid communication with the surrounding ground, so as to allow equalisation of outside and inside pressure and ensure that no granular/solid pressure is exerted to the pressure sensor means (4),
**characterized in that** the pore pressure monitoring device further comprises
a degassing means (10), comprising:
a gas discharge means (14) and a gas-water filter means (12), wherein the a gas-water filter means (12) is adapted for providing a route for gas (8) to escape from the fluid (6) in the sensor cavity (2) towards the gas discharge means (14) for discharging filtered gas (8) to the atmosphere (42).

2. Pore pressure monitoring device according to one of the preceding claims,
wherein the gas discharge means (14) extends from the sensor cavity (2) to or above ground establishing a gas connection to the atmosphere (42).

3. Pore pressure monitoring device according to one of the preceding claims,
wherein the gas discharge means (14) comprises an inner lumen (16) especially extending from the sensor cavity (2) to above ground (40).

4. Pore pressure monitoring device according to one of the preceding claims,
wherein the gas discharge means (14) comprises a discharge tube having the inner lumen (16).

5. Pore pressure monitoring device according to one of the preceding claims,
wherein the gas-water filter means (12) is guided at least partially within the gas discharge means (14).

6. Pore pressure monitoring device according to one of the preceding claims,
wherein the gas-water filter means (12) comprises a gas permeable membrane (18) for separation of the gas (8) from the fluid (6) in the sensor cavity (2).

7. Pore pressure monitoring device according to one of the preceding claims, especially claim 6,
wherein the gas permeable membrane (18) is made from a hydrophobic material.

8. Pore pressure monitoring device according to one of the preceding claims, especially one of the claims 6 or 7,
wherein the gas permeable membrane (18) is provided as a gas permeable membrane fibre or tube (19).

9. Pore pressure monitoring device according to one of the preceding claims,
wherein a projecting portion (20) of the gas-water filter means (12) projects inside the sensor cavity (2).

10. Pore pressure monitoring device according to one of the preceding claims,
wherein the gas-water filter means (12) comprises a closed distal end portion, which is impermeable at least for water.

11. Pore pressure monitoring device according to one of the preceding claims,
wherein the gas-water filter means (12) is coupled to and/or at least partially guided within the gas discharge means (14).

12. Pore pressure monitoring device according to one of the preceding claims,
wherein the gas-water filter means (12) is provided at least partially as the gas discharge means (14).

13. Pore pressure monitoring device according to one of the preceding claims,
wherein the gas-water filter means (12) substantially extends from the sensor cavity (2) to essentially above ground and especially to an atmosphere connection means (24).

14. Pore pressure monitoring device according to one of the preceding claims,
wherein the gas discharge means (14) comprises an outer protection sleeve.

15. Pore pressure monitoring device according to one of the preceding claims,
wherein the gas discharge means (14) and/or the gas-water filter means (12) are made of a flexible material and especially plastic material.

16. Pore pressure monitoring device according to one of the preceding claims,
wherein the housing (26) surrounding the sensor cavity (2) comprises a fluid filter means (28) and especially a slotted or screened portion, for filtering fluid (6) out of the ground (40).

17. Pore pressure monitoring device according to one of the preceding claims,
having a data connection means (26) for communicational coupling the pressure sensor means (4) with a data receiving means (32) substantially outside the ground (40),
wherein the degassing means (10) and the data connection means (30) are at least over a section guided within a joint protection means (34), especially a protection tube.

18. Pore pressure monitoring device according to one of the preceding claims,
wherein the degassing means (10) is at least over a section guided within a housing (26), at least partially surrounding the sensor cavity (2).

19. Pore pressure monitoring device according to one of the preceding claims,
wherein the housing (26) comprises a bore (36), the degassing means (10) is at least over a section guided in.

20. Method for monitoring pore water pressure by use of a pore pressure monitoring device according to one of the claims 1 to 19, comprising the steps of:
deploying the pore pressure monitoring device (1) underground;
monitoring pore-pressure data received by the pressure sensor means (4); discharging gas accumulated in the sensor cavity (2) of the pore pressure monitoring device (1) via the degassing means (10) to the atmosphere (42).

## Patentansprüche

1. Porendrucküberwachungsvorrichtung zur Verwendung in der Geotechnik, geeignet zur unterirdischen Entfaltung zur Überwachung des Porenwasserdrucks in der umgebenden Erde, umfassend:
einen Drucksensorhohlraum (2);
ein Gehäuse (26), das den Sensorhohlraum (2) umgibt;
eine Drucksensoreinrichtung (4) zum Messen eines Fluiddrucks einer Fluids (6) in dem Sensorhohlraum (2); wobei
sich der Hohlraum in Fluidkommunikation mit der umgebenden Erde befindet, um eine Angleichung von Außen- und Innendruck zu ermöglichen und zu gewährleisten, dass auf die Drucksensoreinrichtung (4) kein Körnungs-/Feststoff-Druck ausgeübt wird;
**dadurch gekennzeichnet, dass** die Porendrucküberwachungsvorrichtung weiterhin umfasst:
eine Entgasungseinrichtung (10), umfassend:
eine Gasausleitungseinrichtung (14) und eine Gaswasserfiltereinrichtung (12), wobei die Gaswasserfiltereinrichtung (12) geeignet ist, einen Weg für Gas (8) bereitzustellen, um aus dem Fluid (6) in dem Sensorhohlraum (2) zur Gasausleitungseinrichtung (14) zu entweichen, um gefiltertes Gas (8) in die Atmosphäre (42) auszuleiten.

2. Porendrucküberwachungsvorrichtung gemäß einem der vorstehenden Ansprüche, wobei sich die Gasausleitungseinrichtung (14) von dem Sensorhohlraum (2) bis zur Erdoberfläche oder darüber erstreckt, wobei eine Gasverbindung zur Atmosphäre (42) etabliert wird.

3. Porendrucküberwachungsvorrichtung gemäß einem der vorstehenden Ansprüche, wobei die Gasausleitungseinrichtung (14) ein Innenlumen (16) umfasst, das sich insbesondere von dem Sensorhohlraum (2) bis über die Erdoberfläche (40) erstreckt.

4. Porendrucküberwachungsvorrichtung gemäß einem der vorstehenden Ansprüche, wobei die Gasausleitungseinrichtung (14) ein Ausleitungsrohr umfasst, das das Innenlumen (16) aufweist.

5. Porendrucküberwachungsvorrichtung gemäß einem der vorstehenden Ansprüche, wobei die Gaswasserfiltereinrichtung (12) wenigstens teilweise innerhalb der Gasausleitungseinrichtung (14) geführt wird.

6. Porendrucküberwachungsvorrichtung gemäß einem der vorstehenden Ansprüche, wobei die Gaswasserfiltereinrichtung (12) eine gasdurchlässige Membran (18) zur Trennung des Gases (8) von dem Fluid (6) in dem Sensorhohlraum (2) umfasst.

7. Porendrucküberwachungsvorrichtung gemäß einem der vorstehenden Ansprüche, insbesondere Anspruch 6, wobei die gasdurchlässige Membran (18) aus einem hydrophoben Material besteht.

8. Porendrucküberwachungsvorrichtung gemäß einem der vorstehenden Ansprüche, insbesondere einem der Ansprüche 6 oder 7, wobei die gasdurchlässige Membran (18) als gasdurchlässige Membranfaser oder -röhrchen (19) bereitgestellt wird.

9. Porendrucküberwachungsvorrichtung gemäß einem der vorstehenden Ansprüche, wobei ein herausragender Teil (20) der Gaswasserfiltereinrichtung (12) in den Sensorhohlraum (2) hineinragt.

10. Porendrucküberwachungsvorrichtung gemäß einem der vorstehenden Ansprüche, wobei die Gaswasserfiltereinrichtung (12) einen geschlossenen distalen Endteil umfasst, der wenigstens für Wasser undurchlässig ist.

11. Porendrucküberwachungsvorrichtung gemäß einem der vorstehenden Ansprüche, wobei die Gaswasserfiltereinrichtung (12) an die Gasausleitungseinrichtung (14) gekoppelt ist und/oder wenigstens teilweise innerhalb der Gasausleitungseinrichtung (14) geführt wird.

12. Porendrucküberwachungsvorrichtung gemäß einem der vorstehenden Ansprüche, wobei die Gaswasserfiltereinrichtung (12) wenigstens teilweise als Gasausleitungseinrichtung (14) bereitgestellt wird.

13. Porendrucküberwachungsvorrichtung gemäß einem der vorstehenden Ansprüche, wobei sich die Gaswasserfiltereinrichtung (12) im Wesentlichen von dem Sensorhohlraum (2) bis im Wesentlichen oberhalb der Erdoberfläche und insbesondere bis zu einer Atmosphärenverbindungseinrichtung (24) erstreckt.

14. Porendrucküberwachungsvorrichtung gemäß einem der vorstehenden Ansprüche, wobei die Gasausleitungseinrichtung (14) eine äußere Schutzhülle umfasst.

15. Porendrucküberwachungsvorrichtung gemäß einem der vorstehenden Ansprüche, wobei die Gasausleitungseinrichtung (14) und/oder die Gaswasserfiltereinrichtung (12) aus einem flexiblen Material und insbesondere aus Kunststoff bestehen.

16. Porendrucküberwachungsvorrichtung gemäß einem der vorstehenden Ansprüche, wobei das Gehäuse (26), das den Sensorhohlraum (2) umgibt, eine Fluidfiltereinrichtung (28) und insbesondere einen geschlitzten oder gelöcherten Teil umfasst, um Fluid (6) aus der Erde (40) zu filtern.

17. Porendrucküberwachungsvorrichtung gemäß einem der vorstehenden Ansprüche, die eine Datenverbindungseinrichtung (26) aufweist, um die Drucksensoreinrichtung (4) mit einer Datenempfangseinrichtung (32) im Wesentlichen außerhalb des Erdbodens (40) kommunikativ zu koppeln, wobei die Entgasungseinrichtung (10) und die Datenverbindungseinrichtung (30) wenigstens über einen Abschnitt hinweg innerhalb einer Fugenschutzeinrichtung (34), insbesondere eines Schutzrohrs, geführt werden.

18. Porendrucküberwachungsvorrichtung gemäß einem der vorstehenden Ansprüche, wobei die Entgasungseinrichtung (10) wenigstens über einen Abschnitt hinweg innerhalb eines Gehäuses (26), das den Sensorhohlraum (2) wenigstens teilweise umgibt, geführt wird.

19. Porendrucküberwachungsvorrichtung gemäß einem der vorstehenden Ansprüche, wobei das Gehäuse (26) eine Bohrung (36) umfasst, in der die Entgasungseinrichtung (10) wenigstens über einen Abschnitt hinweg geführt wird.

20. Verfahren zur Überwachung des Porenwasserdrucks unter Verwendung einer Porendrucküberwachungsvorrichtung gemäß einem der Ansprüche 1 bis 19, umfassend die Schritte:
Entfalten der Porendrucküberwachungsvorrichtung (1) unter der Erdoberfläche;
Überwachen von Porendruckdaten, die von der Drucksensoreinrichtung (4) empfangen werden;
Ausleiten von Gas, das sich in dem Sensorhohlraum (2) der Porendrucküberwachungsvorrichtung (1) angesammelt hat, über die Entgasungseinrichtung (10) in die Atmosphäre (42).

## Revendications

1. Dispositif de surveillance de pression interstitielle, destiné à être utilisé en ingénierie géotechnique, conçu pour être déployé de manière sous-terraine pour surveiller la pression d'eau interstitielle dans le sol environnant, comprenant :
une cavité de capteur de pression (2),
un boîtier (26) entourant la cavité de capteur (2),
un moyen capteur de pression (4), pour détecter une pression de fluide d'un fluide (6) dans la cavité de capteur (2), dans lequel
la cavité est en communication fluide avec le sol environnant, de manière à permettre une égalisation de la pression extérieure et intérieure et à garantir qu'aucune pression granulaire/solide n'est exercée sur le moyen capteur de pression (4), **caractérisé en ce que** le dispositif de surveillance de pression interstitielle comprend en outre
un moyen de dégazage (10), comprenant :
un moyen d'évacuation de gaz (14) et un moyen de filtration gaz-eau (12), dans lequel le moyen de filtration gaz-eau (12) est conçu pour fournir un itinéraire d'échappement du gaz (8) à partir du fluide (6) dans la cavité de capteur (2) vers le moyen d'évacuation de gaz (14) pour évacuer le gaz filtré (8) vers l'atmosphère (42).

2. Dispositif de surveillance de pression interstitielle selon l'une des revendications précédentes,
dans lequel le moyen d'évacuation de gaz (14) s'étend de la cavité de capteur (2) vers ou au-dessus du sol en établissant une connexion de gaz à l'atmosphère (42).

3. Dispositif de surveillance de pression interstitielle selon l'une des revendications précédentes,
dans lequel le moyen d'évacuation de gaz (14) comprend une lumière intérieure (16) s'étendant en particulier à partir de la cavité de capteur (2) jusqu'au-dessus du sol (40).

4. Dispositif de surveillance de pression interstitielle selon l'une des revendications précédentes,
dans lequel le moyen d'évacuation de gaz (14) comprend un tube d'évacuation ayant la lumière intérieure (16).

5. Dispositif de surveillance de pression interstitielle selon l'une des revendications précédentes,
dans lequel le moyen de filtration gaz-eau (12) est guidé au moins partiellement à l'intérieur du moyen d'évacuation de gaz (14).

6. Dispositif de surveillance de pression interstitielle selon l'une des revendications précédentes,
dans lequel le moyen de filtration gaz-eau (12) comprend une membrane perméable aux gaz (18) pour la séparation du gaz (8) à partir du fluide (6) dans la cavité de capteur (2).

7. Dispositif de surveillance de pression interstitielle selon l'une des revendications précédentes, notamment la revendication 6,
dans lequel la membrane perméable aux gaz (18) est constituée d'un matériau hydrophobe.

8. Dispositif de surveillance de pression interstitielle selon l'une des revendications précédentes, notamment l'une des revendications 6 ou 7,
dans lequel la membrane perméable aux gaz (18) est fournie sous la forme d'une fibre ou d'un tube à membrane perméable aux gaz (19).

9. Dispositif de surveillance de pression interstitielle selon l'une des revendications précédentes,
dans lequel une partie saillante (20) du moyen de filtration gaz-eau (12) fait saillie à l'intérieur de la cavité de capteur (2).

10. Dispositif de surveillance de pression interstitielle selon l'une des revendications précédentes,
dans lequel le moyen de filtration gaz-eau (12) comprend une partie d'extrémité distale fermée, qui est imperméable au moins à l'eau.

11. Dispositif de surveillance de pression interstitielle selon l'une des revendications précédentes,
dans lequel le moyen de filtration gaz-eau (12) est couplé et/ou au moins partiellement guidé à l'intérieur du moyen d'évacuation de gaz (14).

12. Dispositif de surveillance de pression interstitielle selon l'une des revendications précédentes,
dans lequel le moyen de filtration gaz-eau (12) est prévu au moins partiellement en tant que moyen d'évacuation de gaz (14).

13. Dispositif de surveillance de pression interstitielle selon l'une des revendications précédentes,
dans lequel le moyen de filtration gaz-eau (12) s'étend sensiblement à partir de la cavité de capteur (2) jusqu'à essentiellement au-dessus du sol et en particulier jusqu'à un moyen de connexion à l'atmosphère (24).

14. Dispositif de surveillance de pression interstitielle selon l'une des revendications précédentes,
dans lequel le moyen d'évacuation de gaz (14) comprend un manchon de protection externe.

15. Dispositif de surveillance de pression interstitielle selon l'une des revendications précédentes,
dans lequel le moyen d'évacuation de gaz (14) et/ou le moyen de filtration gaz-eau (12) sont réalisés en un matériau souple, et notamment en matière plastique.

16. Dispositif de surveillance de pression interstitielle selon l'une des revendications précédentes,
dans lequel le boîtier (26) entourant la cavité de capteur (2) comprend un moyen de filtration de fluide (28) et en particulier une partie fendue ou tamisée, pour filtrer le fluide (6) hors du sol (40).

17. Dispositif de surveillance de pression interstitielle selon l'une des revendications précédentes,
ayant un moyen de connexion de données (26) pour coupler de manière communicationnelle le moyen capteur de pression (4) avec un moyen de réception de données (32) sensiblement à l'extérieur du sol (40),
dans lequel le moyen de dégazage (10) et le moyen de connexion de données (30) sont au moins sur une section guidée à l'intérieur d'un moyen de protection conjointe (34), en particulier un tube de protection.

18. Dispositif de surveillance de pression interstitielle selon l'une des revendications précédentes,
dans lequel le moyen de dégazage (10) est au moins sur une section guidée à l'intérieur d'un boîtier (26), entourant au moins partiellement la cavité de capteur (2).

19. Dispositif de surveillance de pression interstitielle selon l'une des revendications précédentes,
dans lequel le boîtier (26) comprend un alésage (36), et le moyen de dégazage (10) est au moins sur une section guidée à l'intérieur.

20. Méthode de surveillance de pression interstitielle en utilisant un dispositif de surveillance de pression interstitielle selon l'une des revendications 1 à 19, comprenant les étapes consistant à :
déployer le dispositif de surveillance de pression interstitielle (1) de manière souterraine ;
surveiller des données de pression interstitielle reçues par le moyen capteur de pression (4) ;
évacuer du gaz accumulé dans la cavité de capteur (2) du dispositif de surveillance de pression interstitielle (1) via les moyens de dégazage (10) vers l'atmosphère (42).
